# EUROPEAN PATENT APPLICATION

(11) **EP 4 760 614 A1**
(43) Date of publication of application: **17.06.2026**
(21) Application number: 25221617.1
(22) Date of filing: 09.12.2025
(51) Int. Cl.: G06Q 10/063, G06Q 10/087, G06Q 30/0201, G06Q 30/0204

(54) **GENERATION PROGRAM, GENERATION METHOD, AND INFORMATION PROCESSING DEVICE**

(30) Priority: 11.12.2024 JP 2024217127
(71) Applicant: FUJITSU LIMITED, Kawasaki-shi, Kanagawa 211-8588 (JP)
(72) Inventor: KIKUCHI, Takashi, Kawasaki-shi, Kanagawa, 211-8588 (JP)
(74) Representative: Hoffmann Eitle

(57) **Abstract**

A generation program causes a computer to execute a process including acquiring purchase information of a product or service, detecting an area in a store where a product is arranged, when an analysis result of the acquired purchase information during a certain period of time set in advance satisfies a predetermined condition, among a plurality of video images of the detected area, extracting an analysis result of each of the video images according to the certain period of time, every time the analysis result of the video image according to the certain period of time is extracted, storing the extracted analysis result of the video image in a storage, by inputting a prompt including the analysis result of the video image stored in the storage during a first period of time into a language model, and generating and outputting information on a measure to be taken in the store.

## Description

### FIELD

The embodiments discussed herein are related to a generation program, a generation method, and an information processing device.

### BACKGROUND

In recent years, AI chatbot services where Artificial Intelligence (AI) responds to user queries have been increasing. For example, there are dialogue systems that respond to user queries, using large-scale language models such as large language models (LLMs). When a large-scale language model is used to generate a response to a query, a phenomenon where a false content and a content irrelevant to the context are generated and output as though the contents are true (hallucination). The related technologies are described, for example, in: International Publication Pamphlet No. WO 2014/083656, Japanese Laid-open Patent Publication No. 2021-033471, and Japanese Laid-open Patent publication No. 2004-094943.

However, with the technology described above, it is not possible to generate a correct response to a query, and it is difficult to accurately generate information on measures to be taken in a store.

Accordingly, it is an object in one aspect of an embodiment of the invention to provide a generation program, a generation method, and an information processing device that can accurately generate information on measures to be taken in a store.

### SUMMARY

According to an aspect of an embodiment, a generation program causes a computer (100) to execute a process including acquiring (S0) purchase information of a product or service, detecting (S103) an area in a store where a product is arranged, when an analysis result of the acquired purchase information during a certain period of time set in advance satisfies a predetermined condition, among a plurality of video images of the detected area, extracting (S104, S105) an analysis result of each of the video images according to the certain period of time, every time the analysis result of the video image according to the certain period of time is extracted, storing (S106) the extracted analysis result of the video image in a storage, by inputting a prompt including the analysis result of the video image stored in the storage during a first period of time into a language model, generating (S108) information on a measure to be taken in the store, and outputting (S109) the generated information on the measure.

### BRIEF DESCRIPTION OF DRAWINGS

FIG. 1 is a diagram for explaining the overall configuration of a system according to a first embodiment;
FIG. 2 is a diagram for explaining a process of an information processing device according to the first embodiment;
FIG. 3 is a diagram for explaining a specific example of accumulating pieces of information on a sales area;
FIG. 4 is a flowchart illustrating a flow of processing according to the first embodiment;
FIG. 5 is a block diagram illustrating a functional configuration of an information processing device according to a second embodiment;
FIG. 6 is a diagram for explaining the whole process of the information processing device according to the second embodiment;
FIG. 7 is a diagram illustrating an example of data structures of a detection pattern and a matching pattern;
FIG. 8 is a diagram illustrating an example of a knowledge graph;
FIG. 9 is a diagram illustrating an example of an action scene graph;
FIG. 10 is a diagram for explaining a graph analysis unit in detail;
FIG. 11A is a diagram for explaining a process of a first generation unit;
FIG. 11B is a diagram for explaining a process of a third generation unit;
FIG. 11C is a diagram for explaining a process of the third generation unit;
FIG. 12 is a flowchart illustrating a processing procedure of the information processing device according to the second embodiment;
FIG. 13 is a diagram illustrating an example of a scene graph;
FIG. 14 is a diagram for explaining a generation example of a scene graph indicating a relationship between a person and an object;
FIG. 15 is a diagram for explaining identification of relationship using a scene graph;
FIG. 16 is a diagram illustrating an example of relationship identification using a scene graph; and
FIG. 17 is a diagram for explaining an example of a hardware configuration.

### DESCRIPTION OF EMBODIMENTS

Preferred embodiments will be explained with reference to accompanying drawings. However, the invention is not limited to the embodiments. The embodiments may be combined as appropriate within a range that does not contradict each other.

### (a) First Embodiment

### System Configuration

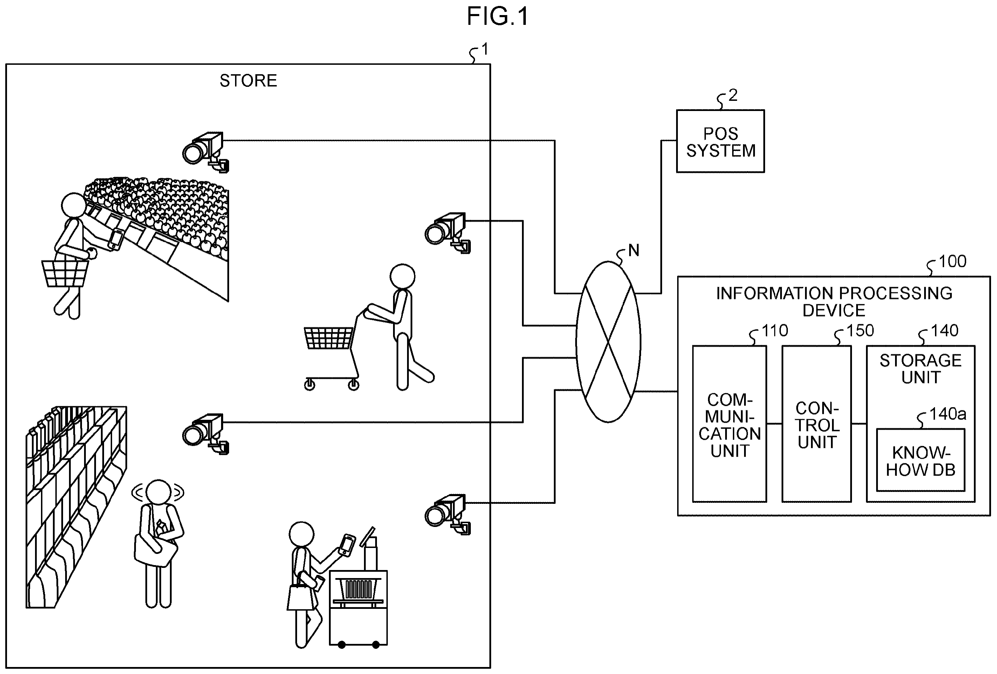

FIG. 1 is a diagram for explaining the overall configuration of a system according to a first embodiment. As illustrated in FIG. 1, the system includes a store 1, a point of sale (POS) system 2, and an information processing device 100. The devices are communicably connected to each other via a network N. The network N can be either wired or wireless, and any communication network such as the Internet and a dedicated line may be used.

The store 1 is an example of a facility including a warehouse, factory, and the like, and a plurality of monitoring cameras (hereinafter, may be simply referred to as a camera) and various types of cash registers are installed in the store 1. For example, each of the monitoring cameras is installed in aisles of users such as customers and consumers, product shelves on which products are displayed, self-service checkout machines where users purchase products, and the like. The captured video data (hereinafter, may be simply referred to as video image) is output to the information processing device 100. For example, the self-service checkout machine is also referred to as self-checkout, automated checkout, self-checkout machine, self-checkout register, and the like.

The POS system 2 is an example of a server device that collects purchase information in cooperation with a barcode reader used in various types of cash registers and stores, and that generates and manages POS data recorded when a product is sold in the store 1. That is, the POS system 2 sums up and manages sales information of the store 1 in real time.

In this example, the POS data is customer consumption behavior data acquired by the POS system. The data on consumption behavior is data that includes one of items of date and time when the product is purchased, the number of purchased products, the name of the purchased product, the price of the purchased product, gender of the person who purchased the product, and the age group of the person who purchased the product. That is, the POS data is information input to the cash register and the like, and is information in which the information on the person who purchased the product or the purchased product is associated with the date and time when the product is purchased.

The information processing device 100 is an example of a computer that generates and outputs appropriate coaching information according to a request (including a question) from the manager or the person in charge of the store 1. Specifically, the information processing device 100 acquires POS data from the POS system 2. By referring to the POS data, the information processing device 100 identifies the product whose sales have increased and the sales area of the product, and acquires video data of the sales area. From the video image around the sales area that is automatically acquired, the information processing device 100 analyzes the crowded situation, the behavior pattern of customers, the risk of troubles, and the like.

### Functional Configuration

The information processing device 100 includes a communication unit 110, a storage unit 140, and a control unit 150. The communication unit 110 is a processing unit that performs transmission and reception of various types of data, and for example, is implemented by a communication interface or the like. For example, the communication unit 110 receives POS data from the POS system 2, receives video data from the camera, and transmits the processing results of the information processing device 100 to a specified device.

The storage unit 140 is a processing unit that stores various types of data and computer programs performed by the control unit 150, and for example, is implemented by memory, a hard disk, or the like. The storage unit 140 stores the POS data acquired by the control unit 150, and also stores a know-how database (DB) 140a.

The know-how DB 140a is a database that stores know-how to improve the sales area, manuals to improve the sales area, or the like. Specifically, the know-how DB 140a stores domain knowledge specific to a certain field. For example, the know-how DB 140a stores information needed for examining measures, and knowledge needed for interpreting the results. For example, in the present embodiment, the know-how DB 140a stores the timing of replenishing products for each product, allocation information of security guards, the customer flow in the store and allocation information of security guards and store clerks during the flow, a guidance method during the crowded time, and the like.

The storage unit 140 also stores the corresponding relationship between the installation location of each camera and the product in the video image captured by the camera. That is, from a product, the storage unit 140 stores information that can be uniquely identified by a camera that captures an image of the sales area of the product. Alternatively, from a camera, the storage unit 140 stores information that can identify the product at the position (sales area) where the camera captures images.

The control unit 150 is a processing unit that controls the entire information processing device 100, and for example, is executed by a processor or the like. For example, the control unit 150 runs an AI agent 1a (hereinafter, simply referred to as an agent) such as a chatbot, and the agent generates and outputs an appropriate response to the request from the user.

For example, the control unit 150 performs the following processes using the agent 1a. The agent 1a acquires POS data that is purchase information of a product or service. The agent 1a detects the area (sales area) in the store 1 where the product is arranged, when the analysis result of the purchase information during a certain period of time set in advance satisfies a predetermined condition. Among a plurality of video images of the detected area, the agent 1a extracts the analysis results of each of the video images according to a certain period of time, and every time the analysis result of the video image according to the certain period of time is extracted, stores the extracted analysis result of the video image in the storage unit 140. By inputting a prompt including the analysis result of the video image stored in the storage unit 140 during a first period of time and a request for measures to be taken in the store 1 into the language model, the agent 1a generates and outputs information on the measures to be taken in the store 1, as a response to the request.

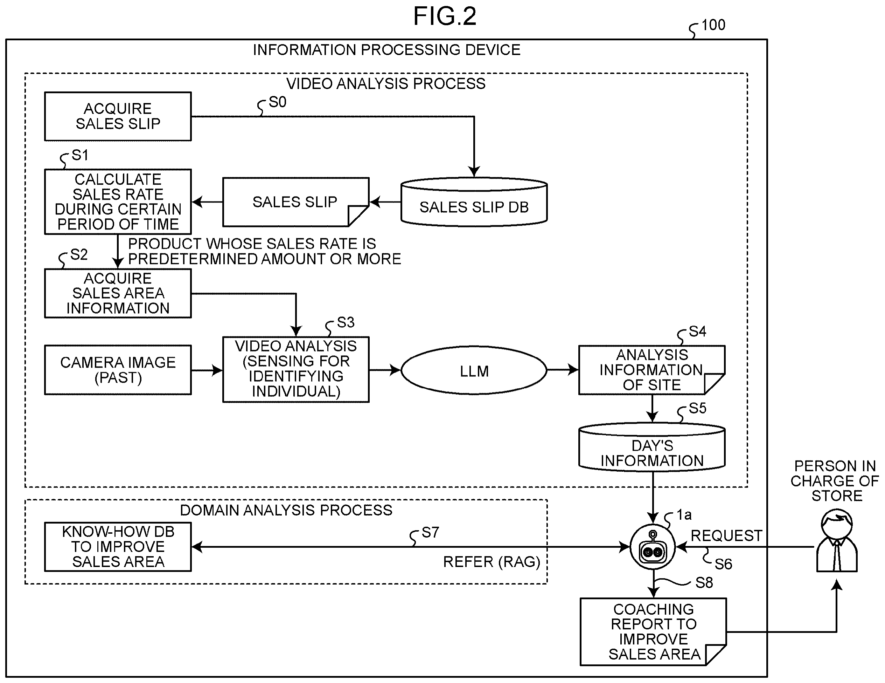

The process of the control unit 150 will now be specifically described with reference to FIG. 2. FIG. 2 is a diagram for explaining a process of the information processing device 100 according to the first embodiment. Each process illustrated in FIG. 2 is executed by the control unit 150 (agent 1a).

### Premise

At any given time, such as before the process is started or after the process is started, the agent 1a acquires a "sales slip" that is POS data from the POS system 2, and stores the sales slip in the storage unit 140 as a sales slip DB (S0).

### Video Analysis Process

For example, the agent 1a analyzes the video images captured by the camera during the first period of time such as one day, and generates and accumulates the analysis information of the sales area of the product whose sales have increased.

Specifically, as illustrated in FIG. 2, the agent 1a acquires the sales slips from the sales slip DB, and calculates the sales rate of each product during a certain period of time such as "three hours from 13:00 to 16:00", for example (S1). Subsequently, after identifying the product whose sales rate is a predetermined amount or more from the calculation results, the agent 1a acquires the sales area information of the identified product (target), by referring to the information stored in the storage unit 140 (S2).

Then, the agent 1a performs video analysis on the video data of the camera, and extracts video images of the sales area of the product serving as a target (S3). For example, the agent 1a identifies a sales area AA of a product A serving as a target. The agent 1a acquires the video images captured by a camera AAA that captures the images of the sales area AA, and acquires the video images corresponding to the fixed period of time (13:00 to 16:00) described above among the acquired video images.

The agent 1a then inputs the video images corresponding to the fixed period of time (13:00 to 16:00) described above to a trained machine learning model such as a large multi-modal model (LMM), a large language model (LLM), or a language model, and acquires the analysis information of the site (S4). For example, the agent 1a inputs the corresponding video images (a plurality of frames) into the LLM, and documents the feature amounts of the corresponding video images.

Then, the agent 1a accumulates the "documented feature amounts" that are the analysis information of the site acquired during the first period of time (S5). Thus, for each business day, every time the product whose sales rates have increased is detected, the agent 1a accumulates pieces of analysis information of the site of the product.

In this situation, as illustrated in FIG. 2, the agent 1a acquires a request for measures of "I would like to know how to improve safety measures during business hours", from a user such as a person in charge of the store. (S6). Upon obtaining the request, the agent 1a then performs a domain analysis process and a response control process.

### Domain Analysis Process

As illustrated in FIG. 2, the agent 1a performs a domain analysis to examine measures using the know-how DB 140a and user journeys (S7). For example, the agent 1a identifies the "safety measures", by performing a morphological analysis or the like on the request of "I would like to know how to improve safety measures during business hours" input by a user. Then, a domain analysis unit 40 acquires information including the "safety measures" from the know-how DB 140a.

### Response Control Process

The agent 1a inputs the information acquired by the domain analysis process, the analysis information of the site, and the request of "I would like to know how to improve safety measures during business hours" into a language model, and outputs the information output from the language model to the person in charge of the store, as a coaching report to improve the sales area (S8). Specifically, the agent 1a provides coaching on improvement measures after the date of becoming an analysis target (corresponds to a period of time after the first period of time). For example, as a coaching report, the agent 1a notifies safety measures such as "Increase two security guards from 13:00 to 15:00" for the next day, "Make the product shelf of the product A one-way from 13:00 to 16:00" for the next day, "Increase the number of security guards from 9:00 to 13:00 when the event is held on the rooftop because there are many children" for the event to be held, and the like.

If the "period of time", "day of the week", "time", or the like of the analysis target is specified by the person in charge of the store, the agent 1a can input the analysis information of the site corresponding to the specified period of time, into the language model.

### Specific Example

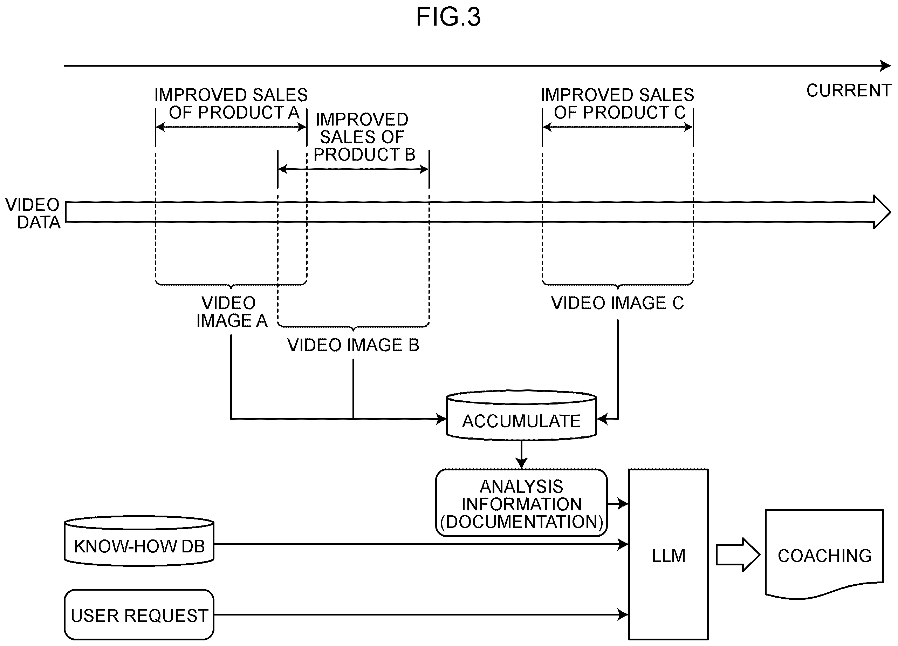

From a video image of a day's sales, a specific example of accumulating pieces of sales area information of each product whose sales have increased will now be described. FIG. 3 is a diagram for explaining a specific example of accumulating pieces of information on a sales area. As illustrated in FIG. 3, from the past video images, the agent 1a acquires video images A during a time zone when the sales of a product A have increased, video images B during a time zone when the sales of a product B have increased, and video images C during a time zone when the sales of a product C have increased, and accumulates pieces of analysis information on the basis of each of the video images.

As illustrated in FIG. 3, the time zones during which the products are selling may be overlapped, and in such a case, the video images of the overlapped time zones will be obtained. Moreover, every time a product that has satisfied a predetermined condition in the past video image is detected, the agent 1a acquires and accumulates the video images. For example, the predetermined condition includes a case when the sales rates of a fixed period of time or a certain period of time per unit time is equal to or greater than a threshold value or the like. The certain period of time may be optionally set and changed by a user.

The agent 1a then inputs the request, know-how, and analysis information into the language model (LLM), and requests the language model to analyze the input request, know-how, and analysis information. Then, the agent 1a rewrites the output results of the language model into textual information that can be viewed by the user or the like, and outputs the rewritten results to a specified terminal or displays the rewritten results on a display and the like.

### Flowchart

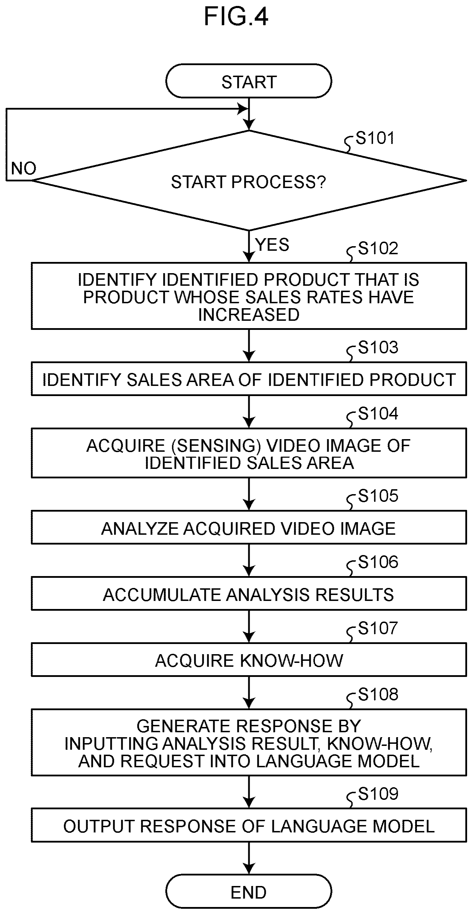

FIG. 4 is a flowchart illustrating a flow of processing according to the first embodiment. In this example, the user request has already been acquired. As illustrated in FIG. 4, when instructed to start the process (Yes at S101), the information processing device 100 performs the following process.

Specifically, the information processing device 100 identifies the identified product (target) that is a product whose sales rates have increased (S102). Then, the information processing device 100 identifies the sales area of the identified product (S103), and acquires the video images of the identified sales area (S104).

Subsequently, the information processing device 100 analyzes the acquired video images of the sales area (S105), and accumulates the analysis results (S106).

When coaching information is then to be generated, the information processing device 100 acquires the know-how (S107), and generates a response on the basis of the output results obtained by inputting the analysis results, the know-how, and the request into the language model (S108). Then, the information processing device 100 outputs the output results (response) of the language model, as coaching information (S109).

In the flowchart described above, the response control process (S107 to S109) is performed after the video analysis process (S102 to S106). However, it is not limited thereto, and the response control process and the video analysis process may be performed in separate flows.

Moreover, the information processing device 100 may perform the video analysis process (S102 to S106) at the end of a day's business, or when the information processing device 100 acquires a user request.

### Effects

As described above, the information processing device 100 accumulates the analysis results of the sales area of each product whose sales have improved as needed, and uses the accumulated analysis results to generate coaching information. As a result, the information processing device 100 generates coaching information using video images of a plurality of products, in addition to video images of one location corresponding to a certain product. Hence, the information processing device 100 can provide coaching while taking into account the entire store 1. Moreover, the information processing device 100 can take into account the influence of the sales area of the well selling product on others or the like. Hence, it is possible to improve the accuracy of coaching information.

### (b) Second Embodiment

Incidentally, for the analysis process of video images described in the first embodiment, it is possible to use graph data in which the relationship of objects that appear on the video image are associated with each other. Specifically, by searching the graph data of the video image of the detected area (sales area), the control unit 150 of the information processing device 100 identifies the results indicating the interaction information associated with a person. By inputting each of the domain knowledge of the store 1, the identified results indicating the interaction information, and the request for measures to be taken in the store into the language model, the control unit 150 generates a response to the request.

### Functional Configuration

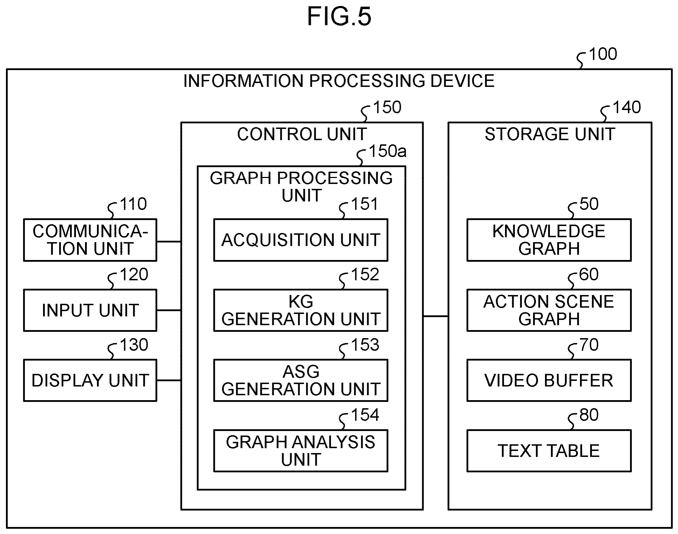

FIG. 5 is a block diagram illustrating a functional configuration of the information processing device 100 according to a second embodiment. As illustrated in FIG. 5, the information processing device 100 includes the communication unit 110, an input unit 120, a display unit 130, the storage unit 140, and the control unit 150.

The communication unit 110 performs data communication with a camera via a network. For example, the communication unit 110 receives video data from the camera. Moreover, the communication unit 110 performs data communication with an external server via a network. For example, the communication unit 110 receives text data, which will be described below, from the external server.

The input unit 120 is an input device that inputs various types of information to the control unit 150 of the information processing device 100. A user U1 may operate the input unit 120 to input a query 11, which will be described below. The display unit 130 is a display device that displays information output from the control unit 150.

The storage unit 140 includes a knowledge graph 50, an action scene graph 60, a video buffer 70, and a text table 80. The knowledge graph 50 is graph data generated on the basis of a detection pattern and a matching pattern, which will be described below. The action scene graph 60 is graph data generated on the basis of the knowledge graph 50 and video data. The video buffer 70 is a buffer that stores video data.

Moving on to the description of the control unit 150. The control unit 150 includes a graph processing unit 150a that includes an acquisition unit 151, a KG generation unit 152, an ASG generation unit 153, and a graph analysis unit 154.

The acquisition unit 151 acquires video data captured by a camera. The acquisition unit 151 stores the video data in the video buffer 70. Moreover, the acquisition unit 151 acquires text data from an external server. The acquisition unit 151 stores the text data in the text table 80.

### Each Process of Information Processing Device 100

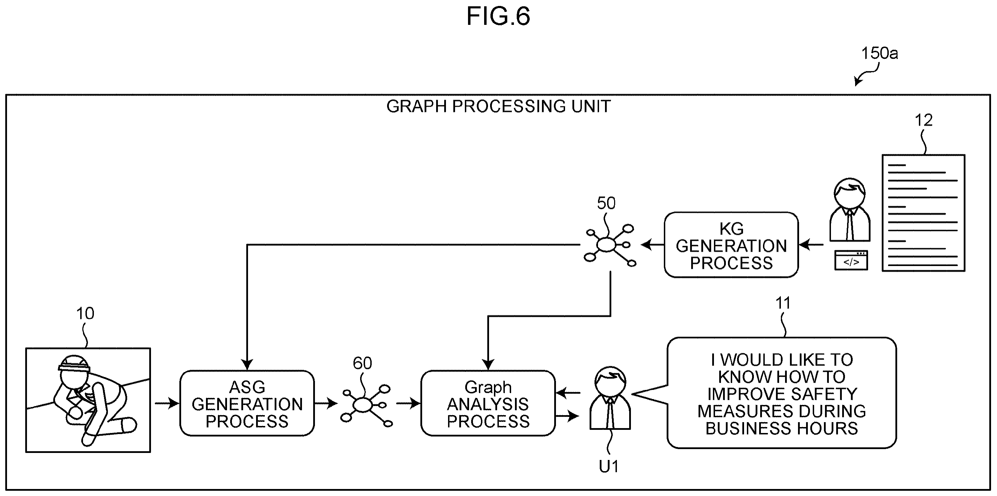

FIG. 6 is a diagram for explaining the whole process of the information processing device according to the second embodiment. For example, upon receiving the query 11 including a request for measures such as "I would like to know how to improve safety measures during business hours" from the user U1, the information processing device 100 in the first embodiment is a device that outputs a response to the query 11. A video image 10 is a time-series frame (still image).

The information processing device 100 performs a KG generation process, an ASG generation process, and a graph analysis process. For example, the KG generation process and the ASG generation process are performed in advance. Upon receiving the query 11 that is an example of a user request, the graph analysis process performs a process of generating a response. In the following description, the KG generation process, the ASG generation process, and the graph analysis process will be described in this order.

### KG Generation Process

The KG generation unit 152 generates the knowledge graph 50 by performing the KG generation process. The KG generation unit 152 stores the knowledge graph 50 in the storage unit 140.

The KG generation process performed by the information processing device 100 will be described. The KG generation process is a process of generating the knowledge graph 50 that represents the condition for detecting a certain event in the video image 10. For example, the knowledge graph 50 is a graph corresponding to a detection pattern and a matching pattern.

For example, the KG generation unit 152 acquires text 12 relating to a domain serving as a detection target, that is the detection target included in the video image 10. The text 12 is "risky and dangerous action leading to an accident" and the like. By using the LLM or the like, the KG generation unit 152 generates a list of detection targets from the text 12. For example, by taking the store 1 as an example, the list of detection targets includes the "crowded location of the product", the "location in the store where the number of security guards is insufficient", and the like.

By setting the list of detection targets in a prompt for generating the detection pattern and the matching pattern, and inputting the prompt into the LLM, the KG generation unit 152 generates a plurality of candidates for the detection pattern and the matching pattern.

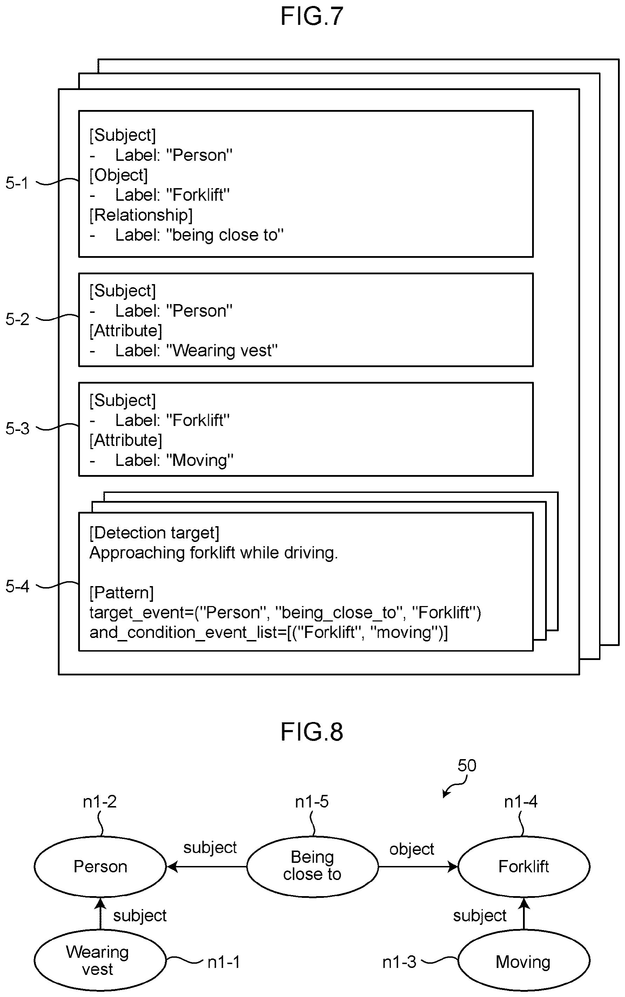

FIG. 7 is a diagram illustrating an example of data structures of a detection pattern and a matching pattern. The example illustrated in FIG. 7 includes detection patterns 5-1, 5-2, and 5-3, and a matching pattern 5-4. The detection patterns 5-1 to 5-3 each define the condition of the detection target. In the detection pattern 5-1, "Subject", "Object", and "Relationship" are defined. For example, the detection pattern 5-1 represents a relationship (Relationship) in which a person (Person) corresponding to the "Subject" is being close to a forklift corresponding to the "Object". The "Relationship" is an example of interaction information.

For example, by taking the store 1 in the first embodiment as an example, in the detection pattern 5-1, the "Relationship" represents a relationship (purchasing, holding, queuing, and the like) of behavior or the like of a customer (Person) corresponding to the "Subject", with respect to the "Object" such as a product. Moreover, the detection pattern 5-1 represents the relationship indicating an action (controlling, guiding) or the like of a security guard (Person) corresponding to the "Subject" with respect to the "Object" such as an aisle.

In the detection patterns 5-2 and 5-3, "Subject" and "Attribute" are defined. For example, the detection pattern 5-2 represents the attribute (Attribute) of wearing a vest by a person corresponding to the "Subject". The "Attribute" is an example of attribute information.

For example, by taking the store 1 in the first embodiment as an example, the detection pattern 5-2 represents the attribute (Attribute) of holding the product (Object) by a person corresponding to the "Subject". That is, the "person is wearing a vest" can be read as the "person is holding the product", the "person is queuing to buy the product", "there is a queue of people who want the product", the "security guards are guiding the people down the aisle", the "security guards are moving around the store", and the like.

The matching pattern 5-4 relates to each detection target that matches the conditions of the detection patterns 5-1, 5-2, and 5-3, and further defines the condition of a matching target. For example, the matching pattern 5-4 defines the "Detection target" and the "Pattern". The "Pattern" defines the pattern in which the person is being close to a forklift, and the forklift is moving. In such a "Pattern", whether the person is being close to the forklift is determined on the basis of the detection pattern 5-1. Whether the forklift is moving is determined on the basis of the detection pattern 5-3. As defined in the detection pattern 5-2, information such as the target person is the person wearing a vest, may be further set in the "Pattern".

For example, by taking the store 1 in the first embodiment as an example, the "Pattern" defines a pattern in which the person is being close to the product and is queuing until the person picks up the product, a pattern in which store clerks and security guards are controlling the crowd of people around a certain product, and the like. In such a "Pattern", whether the person is holding the product is determined on the basis of the detection pattern 5-1. The "person is being close to the forklift" may be read as the "person is being close to the product", and the "forklift is moving" may be read as the "product to be purchased is being held".

When the video image 10 corresponds to the "Pattern" in the matching pattern 5-4, it is determined that the matching condition indicated in the "Detection target" is satisfied.

The KG generation unit 152 evaluates the candidates of the detection pattern and the matching pattern, and selects the optimal detection pattern and matching pattern, on the basis of the evaluation results. The KG generation unit 152 generates the knowledge graph 50 on the basis of the selected detection pattern and matching pattern.

FIG. 8 is a diagram illustrating an example of the knowledge graph. For example, the knowledge graph 50 illustrated in FIG. 8 is generated on the basis of the detection patterns 5-1 to 5-3, and the matching pattern 5-4. The knowledge graph 50 includes nodes n1-1, n1-2, n1-3, n1-4, and n1-5. The node n1-1 is a node corresponding to the "Subject is wearing a vest". The node n1-2 is a node corresponding to a person (Person). An arrow is extending toward the node n1-2 from the node n1-1, indicating that the Subject of the node n1-1 is defined by the node n1-2.

The node n1-3 is a node corresponding to the "Subject is moving". The node n1-4 is a node corresponding to a forklift (Forklift). An arrow is extending toward the node n1-4 from the node n1-3, indicating that the Subject of the node n1-3 is defined by the node n1-4.

For example, by taking the store 1 in the first embodiment as an example, the node n1-3 is a node corresponding to the "Subject (person: customer) is holding the product for purchase" or the "Subject (person: security guard) is guiding the flow of people to ensure safety". The node n1-2 is a node corresponding to the product.

The node n1-5 is a node corresponding to the "Subject is being close to the Object". An arrow is extending toward the node n1-2 from the node n1-5, indicating that the Subject of the node n1-5 is defined by the node n1-2. An arrow is extending toward the node n1-4 from the node n1-5, indicating that the Object of the node n1-5 is defined by the node n1-4. The knowledge graph 50 may also be generated only from the detection pattern. Moreover, in this case, the knowledge graph 50 may be represented by the data structures of 5-1 to 5-3. Furthermore, the knowledge graph 50 may be represented by the data structures of 5-1 to 5-4, when the knowledge graph 50 is generated from the detection pattern and the matching pattern.

### ASG Generation Process

Next, the ASG generation process performed by the information processing device 100 will be described. The ASG generation process is a process of generating the action scene graph 60 in which the "information on the characteristics of the site of the store is associated with each action type of a person" from the video image 10, by using the detection pattern of the knowledge graph 50. The ASG is also referred to as a video scene graph or a spatiotemporal scene graph.

For example, the ASG generation unit 153 detects an object in a time-series frame of the video image 10 by using a detection pattern, and tracks the detected object. The ASG generation unit 153 generates a video clip in which the detection results and tracking results are gathered for each predetermined number of frames. By inputting the video clip and a prompt for detecting the relationship and attribute that are generated from the detection pattern into a visual detection model such as a vision language model (VLM), the ASG generation unit 153 identifies the attribute information of the detection target included in the video clip, the interaction information between the detection targets, and time when the attribute information and the interaction information have occurred.

On the basis of the video clip, the attribute information of the detection target specified from the video clip, the interaction information between the detection targets, and the time, the ASG generation unit 153 generates the action scene graph 60. In the action scene graph 60, the relationship among the Subject, object, and relation, or the relationship among the Subject, object, and attribute are held in the units of events (attribute information <attribute>, interaction information <relation>).

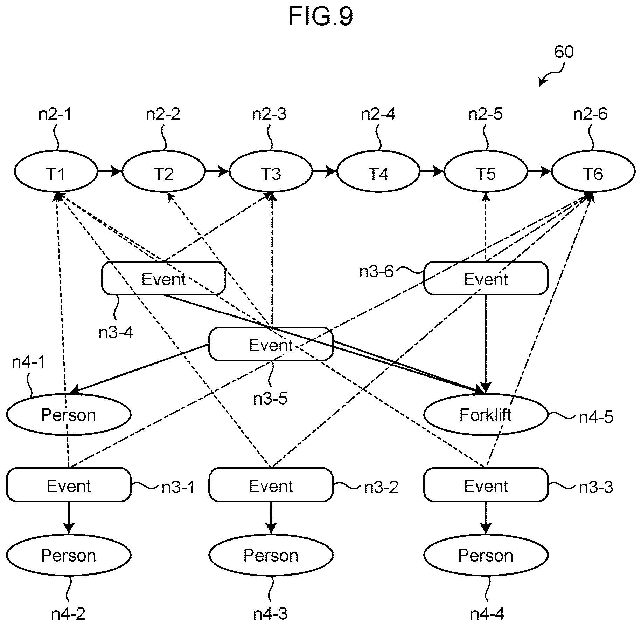

FIG. 9 is a diagram illustrating an example of the action scene graph. As illustrated in FIG. 9, the action scene graph 60 includes time nodes n2-1, n2-2, n2-3, n2-4, n2-5, and n2-6. The action scene graph 60 includes event nodes n3-1, n3-2, n3-3, n3-4, n3-5, and n3-6. The action scene graph 60 includes concrete object nodes n4-1, n4-2, n4-3, n4-4, and n4-5.

The time nodes n2-1 to n2-6 are nodes that indicate time, and each of the time nodes n2-1 to n2-6 corresponds to time T1, T2, T3, T4, T5, and T6. For example, the time T1, T2, T3, T4, T5, and T6 are associated with the time (frame number) of each frame included in the video clip or the like.

The event nodes n3-1 to n3-6 are nodes that correspond to the attribute information and the interaction information. For example, the event nodes n3-1 to n3-3 correspond to "wearing a vest". The event nodes n3-4 and n3-6 correspond to "moving". The event node n3-5 corresponds to "being close to".

For example, by taking the store 1 in the first embodiment as an example, the event nodes n3-1 to n3-3 correspond to "holding the product". The event nodes n3-4 and n3-6 correspond to "walking with the product". The event node n3-5 corresponds to the "person is being close to the product".

The concrete object nodes n4-1 to n4-5 are nodes that correspond to the detection target. For example, the concrete object nodes n4-1 to n4-4 each correspond to person P1, P2, P3, and P4. The concrete object node n4-5 corresponds to a forklift. For example, by taking the store 1 in the first embodiment as an example, the concrete object node n4-5 corresponds to the product.

By using the action scene graph 60, it is possible to grasp various types of information on the video image 10. For example, the event node n3-1 connected to the time nodes n2-1 and n2-6 is connected to the concrete object node n4-2. This indicates that the person P2 who is wearing a vest, is present between the time T1 and T6 in the video image 10. For example, by taking the store 1 in the first embodiment as an example, the person P2 who is holding the product is present between the time T1 and T6 in the video image 10.

The event node n3-2 connected to the time nodes n2-1 and n2-6 is connected to the concrete object node n4-3. This indicates that the person P3 who is wearing a vest, is present between the time T1 and T6 in the video image 10. For example, by taking the store 1 in the first embodiment as an example, the person P3 who is holding the product is present between the time T1 and T6 in the video image 10.

The event node n3-3 connected to the time nodes n2-1 and n2-6 is connected to the concrete object node n4-4. This indicates that the person P4 who is wearing a vest, is present between the time T1 and T6 in the video image 10. For example, by taking the store 1 in the first embodiment as an example, the person P4 who is holding the product is present between the time T1 and T6 in the video image 10.

The event node n3-4 connected to the time nodes n2-1 and n2-3 is connected to the concrete object node n4-5. This indicates that the moving forklift is present between the time T1 and T3 in the video image 10. For example, by taking the store 1 in the first embodiment as an example, the product displayed in the sales area is present between the time T1 and T3 in the video image 10.

The event node n3-5 connected to the time nodes n2-2 and n2-3 is connected to the concrete object nodes n4-1 and n4-5. This indicates that an event in which the person P1 is being close to the moving forklift is present between the time T2 and T3 in the video image 10. For example, by taking the store 1 in the first embodiment as an example, an event in which the person P1 is holding (selecting or the like) the product for purchase, is present between the time T2 and T3 in the video image 10.

The event node n3-6 connected to the time nodes n2-5 and n2-6 is connected to the concrete object node n4-5. This indicates that the moving forklift is present between the time T5 and T6 in the video image 10. For example, by taking the store 1 in the first embodiment as an example, the product displayed in the sales area is present between the time T5 and T6 in the video image 10.

### Graph Analysis Process

Next, the graph analysis process performed by the information processing device 100 will be described. Upon receiving the query 11 including a request for measures to be taken in the store 1 from the user U1, the graph analysis process is a process of generating a response, by analyzing the action scene graph 60, using the LLM. For example, upon receiving the query 11 relating to the video image 10 from the user U1, a generative AI (for example, LLM) generates a response to the query 11, on the basis of the generated action scene graph 60. More specifically, upon receiving a query relating to a first object in the video image from a user, the graph analysis unit 154 identifies the results indicating the interaction information associated with the first object, on the basis of the generated graph data, and generates a response to the query using the generative AI, on the basis of the identified results indicating the interaction information. For example, upon receiving a query relating to the first object in the video image, the graph analysis unit 154 identifies the results indicating the interaction information associated with the first object, by searching the action scene graph 60. Then, by inputting a prompt including the query and the interaction information into the LLM, the graph analysis unit 154 generates a response to the query.

Moreover, for example, the graph analysis unit 154 generates a search query on the basis of the query 11 and the knowledge graph 50, and performs data search in the action scene graph 60, using the search query. The graph analysis unit 154 generates a response, by using the results of data search.

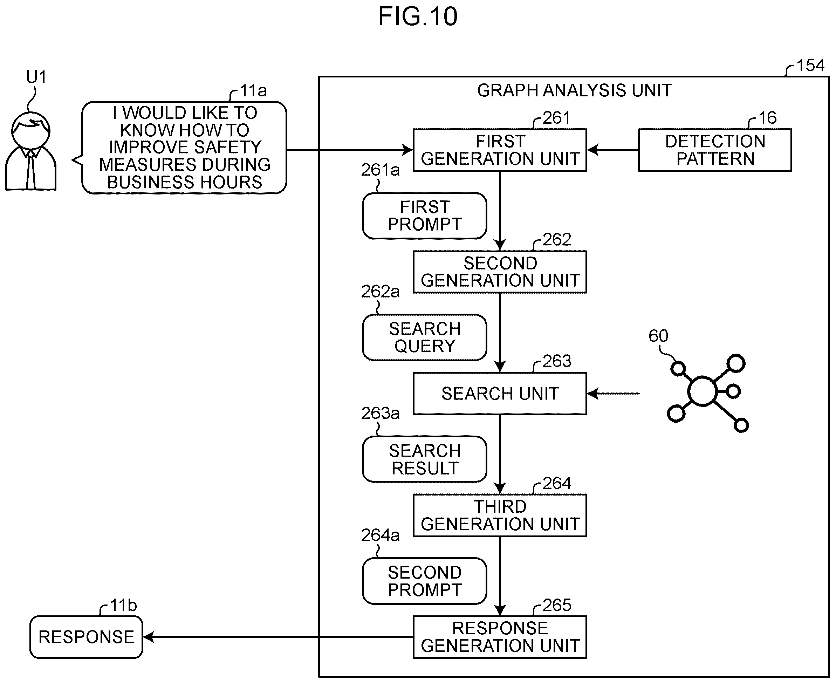

Next, generation of graph analysis will be described in detail. FIG. 10 is a diagram for explaining the graph analysis unit in detail. As illustrated in FIG. 10, upon receiving a query 11a of "I would like to know how to improve safety measures during business hours" including a request for measures to be taken in the store 1 from the user U1, the graph analysis unit 154 of the information processing device 100 generates a response 11b, by analyzing the action scene graph 60, using the LLM.

For example, the graph analysis unit 154 includes a first generation unit 261, a second generation unit 262, a search unit 263, a third generation unit 264, and a response generation unit 265. In the following, each processing unit will be described in this order.

First, the process of the first generation unit 261 will be described. The first generation unit 261 acquires the query 11a, and generates a first prompt 261a on the basis of the query 11a and a detection pattern 16. The first prompt 261a is used to generate a search query to search the action scene graph 60, using the LLM. The detection pattern 16 is a natural sentence representing the detection target.

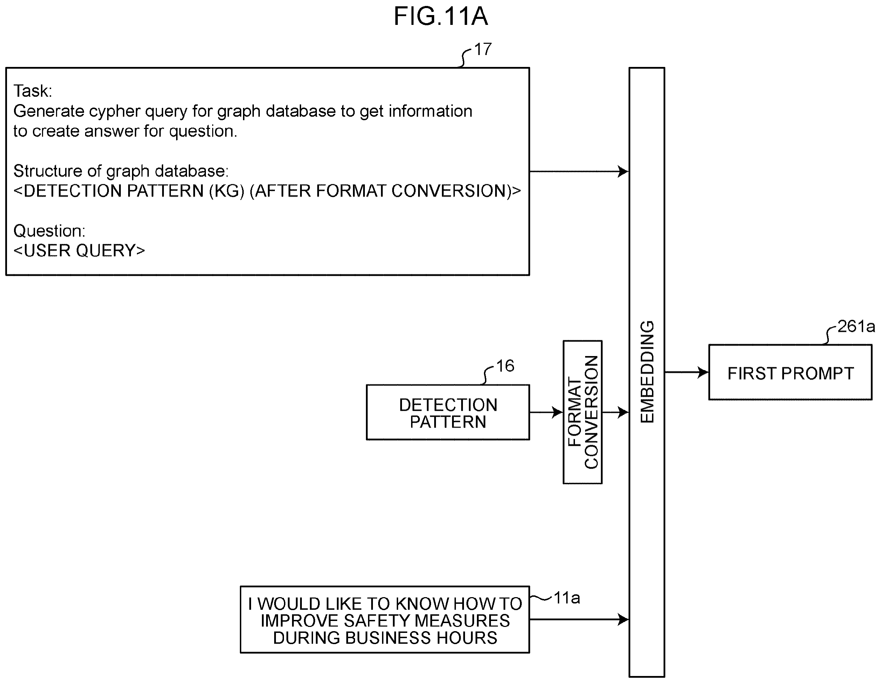

FIG. 11A is a diagram for explaining a process of the first generation unit. As illustrated in FIG. 11A, the first generation unit 261 generates the first prompt 261a, by embedding the results obtained by converting the format of the detection pattern 16 and the query 11a into a template 17 prepared in advance. For example, the information acquired from the detection pattern 16, that is information on the structure of the action scene graph 60 is set in the first prompt 261a.

The first generation unit 261 outputs the first prompt 261a to the second generation unit 262.

Subsequently, the process of the second generation unit 262 in FIG. 10 will be described. The second generation unit 262 generates a search query 262a, by inputting the first prompt 261a into the LLM. For example, the search query 262a includes a node to be searched, interaction information between the nodes, and attribute information of the node, relating to the action scene graph 60. The second generation unit 262 outputs the search query 262a to the search unit 263.

Subsequently, the process of the search unit 263 in FIG. 10 will be described. On the basis of the search query 262a, the search unit 263 searches the action scene graph 60, and acquires a search result 263a. The search unit 263 outputs the search result 263a to the third generation unit 264.

In this process, the process of the search unit 263 will be supplemented with reference to FIG. 9. For example, in the search query 262a, it is assumed that "Person" and "Forklift" (in the example of the store 1, "product" and the like) are specified as nodes to be searched, and "being close to" is specified as interaction information. In this case, the search unit 263 identifies the concrete object nodes n4-1 and n4-5, and the event node n3-5 corresponding to the search query 262a, and searches between the begin time and end time of the event node n3-5. In this case, the begin time is T2 and the end time is T3. Consequently, the person is being close to the forklift between T2 and T3, is obtained as a search result.

For example, in the search query 262a, it is assumed that the "Person" is specified as the node to be searched, and "wearing a vest" is specified as attribute information (in the example of the store 1, the "person is holding the product" or the like). In this case, the search unit 263 identifies the concrete object nodes n4-1 to n4-3 and the event nodes n3-1 to n3-3 corresponding to the search query 262a, and searches between the begin time and the end time of each of the event nodes n3 -1 to n3-3.

For example, the begin time of the event node n3-1 is T1 and the end time is T6. The begin time of the event node n3-2 is T1, and the end time is T6. The begin time of the event node n3-3 is T1, and the end time is T6. Consequently, the time when each person (P2, P3, or P4) is wearing a vest (in the example of the store 1, the "time when the person is holding the product" or the like) is from T1 to T6, is obtained as a search result.

A plurality of search contents may be included in the search query 262a, and the search unit 263 performs the search described above for each of the search contents, and generates the information obtained from each search as the search result 263a.

Subsequently, the process of the third generation unit 264 in FIG. 10 will be described. The third generation unit 264 generates a second prompt 264a, on the basis of the search result 263a. The second prompt 264a is used when a response is generated using the LLM.

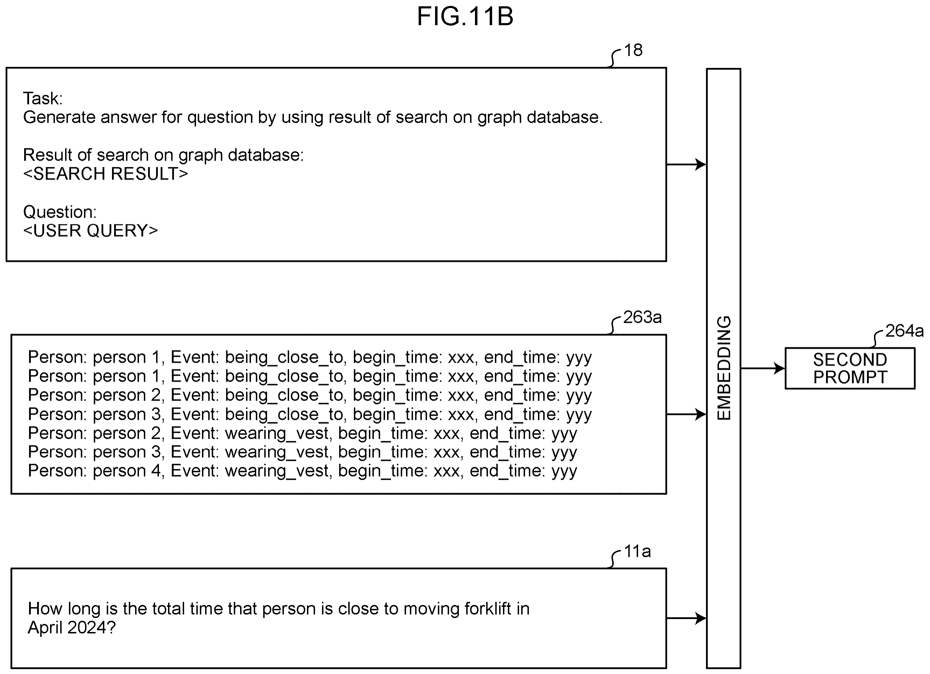

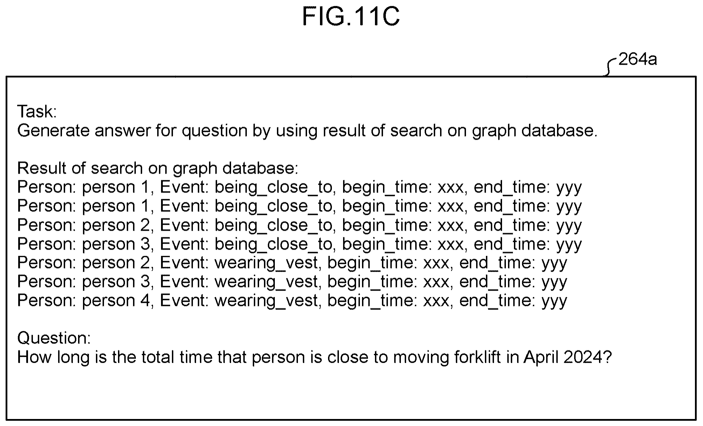

FIG. 11B and FIG. 11C are diagrams for explaining the process of the third generation unit. As illustrated in FIG. 11B, the third generation unit 264 generates the second prompt 264a, by embedding the query 11a and the search result 263a into a template 18 prepared in advance. FIG. 11C illustrates an example of the second prompt 264a.

The third generation unit 264 outputs the second prompt 264a to the response generation unit 265.

Subsequently, the process of the response generation unit 265 will be described. The response generation unit 265 generates the response 11b, by inputting the second prompt 264a into the LLM. The response generation unit 265 outputs the generated response 11b.

### Processing Flow

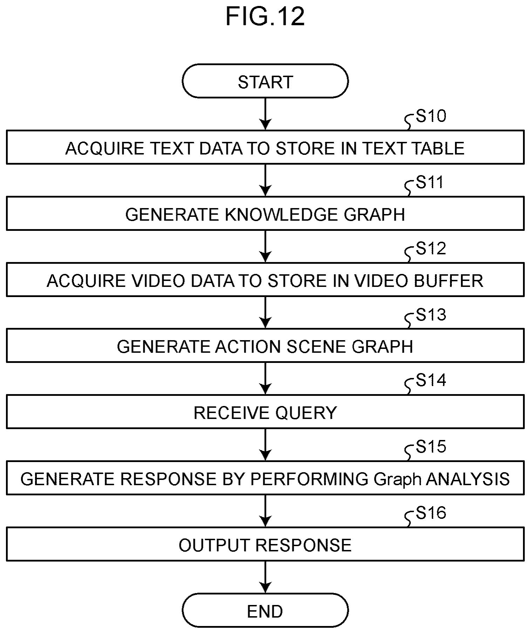

Next, an example of the processing procedure of the information processing device 100 according to the second embodiment will be described. FIG. 12 is a flowchart illustrating a processing procedure of the information processing device according to the second embodiment. As illustrated in FIG. 12, the acquisition unit 151 of the information processing device 100 acquires text data, and stores the acquired text data in the text table 80 (step S10). The KG generation unit 152 of the information processing device 100 generates the knowledge graph 50, on the basis of the text data stored in the text table 80 (step S11). The acquisition unit 151 acquires the video data, and stores the acquired video data in the video buffer 70 (step S12).

The ASG generation unit 153 of the information processing device 100 generates the action scene graph 60, on the basis of the video data stored in the video buffer 70 and the knowledge graph 50 (step S13).

The graph analysis unit 154 of the information processing device 100 receives the query 11 (step S14). The graph analysis unit 154 generates a response by performing a graph analysis (step S15). The graph analysis unit 154 outputs a response (step S16).

### Effects

As described above, the information processing device 100 generates the knowledge graph 50 by the KG generation process, and generates the action scene graph 60 by the ASG generation process. Upon receiving the query 11 from the user U1, the information processing device 100 generates a response on the basis of the knowledge graph 50 and the action scene graph 60. Consequently, the information processing device 100 can generate a correct response to the query.

As described above, the information processing device 100 generates the search query 262a on the basis of the query 11a and the detection pattern 16 relating to the action scene graph 60, and searches the action scene graph 60 on the basis of the search query 262a. The graph analysis unit 154 generates and outputs the response 11b, on the basis of the search result of the action scene graph 60. Consequently, the information processing device 100 can generate a correct response to the query.

The information processing device 100 generates a first prompt 261a on the basis of the query 11a and the detection pattern 16 relating to the action scene graph 60, and generates the search query 262a by inputting the first prompt 251a into the LLM. Consequently, the information processing device 100 can efficiently generate the search query 262a.

The information processing device 100 identifies the node corresponding to the search query from the action scene graph 60, and obtains the information on the node associated with the identified node, as a search result. For example, on the basis of the time node among the nodes corresponding to the search query, the information processing device 100 searches the time when the event relating to the attribute information has taken place in the video image, and the time when the event relating to the interaction information has taken place in the video image. Consequently, the information processing device 100 can search the time when the event relating to the attribute information has taken place and the time when the event relating to the interaction information has taken place, relating to the search query.

### (c) Third Embodiment

Incidentally, in the second embodiment, the action scene graph is used as an example of the graph data. However, it is not limited thereto, and for example, a scene graph that is an example of graph data representing the relationship between the objects included in the video data or the like may also be used. Therefore, in the second embodiment, a scene graph and a generation process of the scene graph performed by the control unit 150 will be described in detail. Detailed description of the search query or the like will be omitted, because the same method as that of the second embodiment will be used except that the graph data to be searched is different.

### Description of Scene Graph

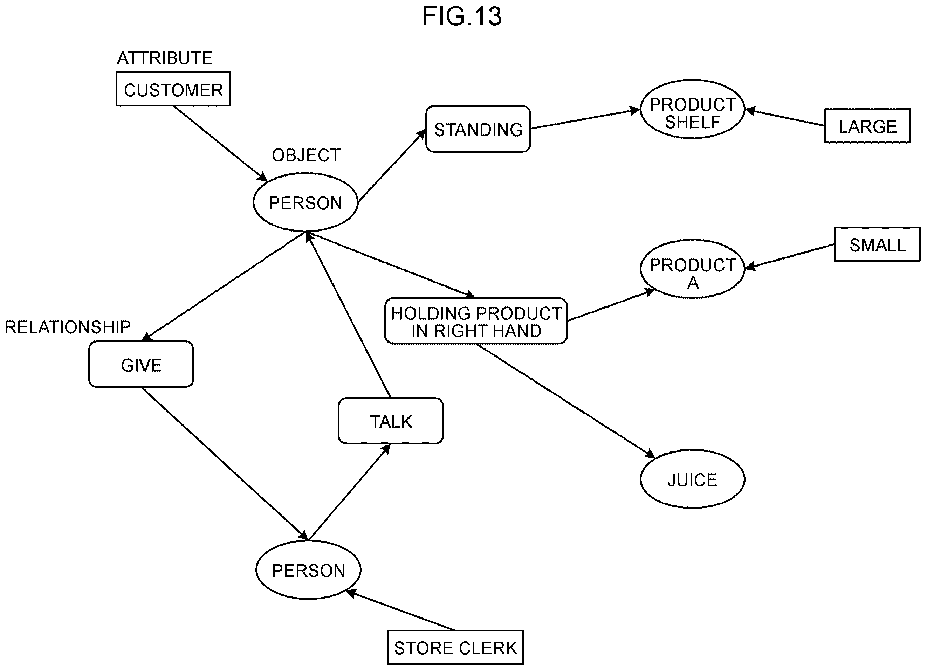

FIG. 13 is a diagram illustrating an example of the scene graph. As illustrated in FIG. 13, a scene graph is a directed graph in which objects in the image data are nodes, each of the nodes has an attribute (for example, the type of the object), and the relationship between the nodes is denoted as a directed edge. The example in FIG. 13 illustrates that the relationship of "talk" is from the node "person" with the attribute "store clerk" to the node "person" with the attribute "customer". In other words, it defines that there is a relationship of the "store clerk is talking to the customer". Moreover, FIG. 13 illustrates that relationship from the node "person" with the attribute "customer" to the node "product shelf" with the attribute "large" is "standing". In other words, it defines that there is a relationship of the "customer is standing in front of the product shelf of large products". For example, by taking the store in the first embodiment as an example, it defines that there is a relationship (holding, queuing, putting in the basket, and the like) of the node "person" with the attribute "customer" to the node "product" with the attribute "object". It defines that there is a relationship (monitoring, moving around, and the like) of the node "security guard" with the attribute "person" to the node "store" with the attribute "object".

The relationships illustrated in this example are merely examples. For example, the relationship includes a complex relationship such as "holding the product A on the right hand", in addition to a simple relationship such as "holding" and the like. A scene graph corresponding to the relationship between a person and a person, and a scene graph corresponding to the relationship between a person and an object may be stored separately. Alternatively, one scene graph including each relationship may also be stored. Moreover, the scene graph may be generated by the control unit 150, which will be described below, or may be generated in advance.

### Generation of Scene Graph

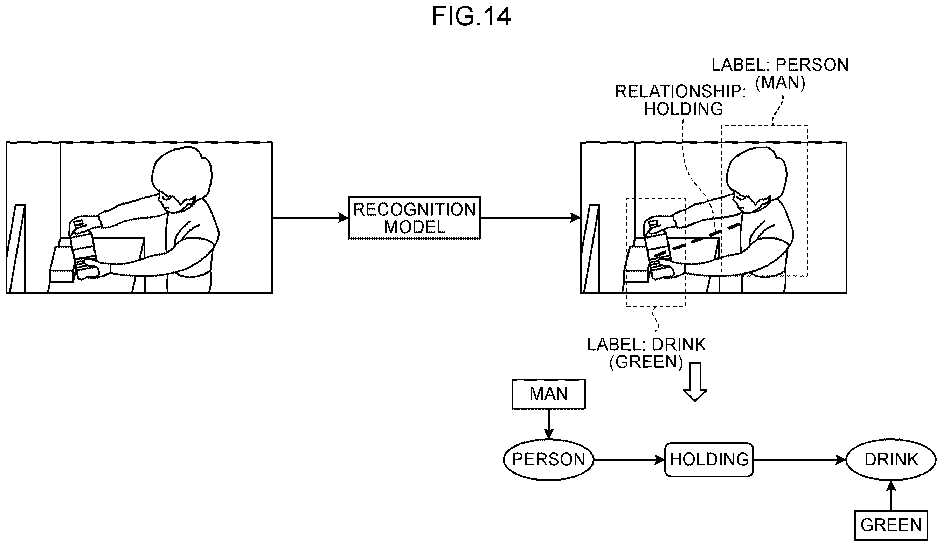

Subsequently, generation of the scene graph will be described. FIG. 14 is a diagram for explaining a generation example of the scene graph indicating a relationship between a person and an object. As illustrated in FIG. 14, the control unit 150 inputs image data into the trained recognition model, and obtains a label "person (man)", a label "drink (green)", and relationship of "holding", as the output results of the recognition model. That is, the control unit 150 obtains that the "man is holding green drink". As a result, the control unit 150 generates a scene graph that associates the relationship of "holding" from the node "person" with the attribute "man" to the node "drink" with the attribute "green". The generation of the scene graph is merely an example, and other methods may also be used, or a manager or the like may manually generate the scene graph.

Next, identification of relationship using a scene graph will be described. The control unit 150 performs a relationship identification process that identifies the relationship between a person and a person or the relationship between a person and an object in the video data, according to the scene graph. Specifically, for each frame in the video data, the control unit 150 identifies the type of a person and the type of an object in the frame, and identifies the relationship by searching the scene graph using the identified information.

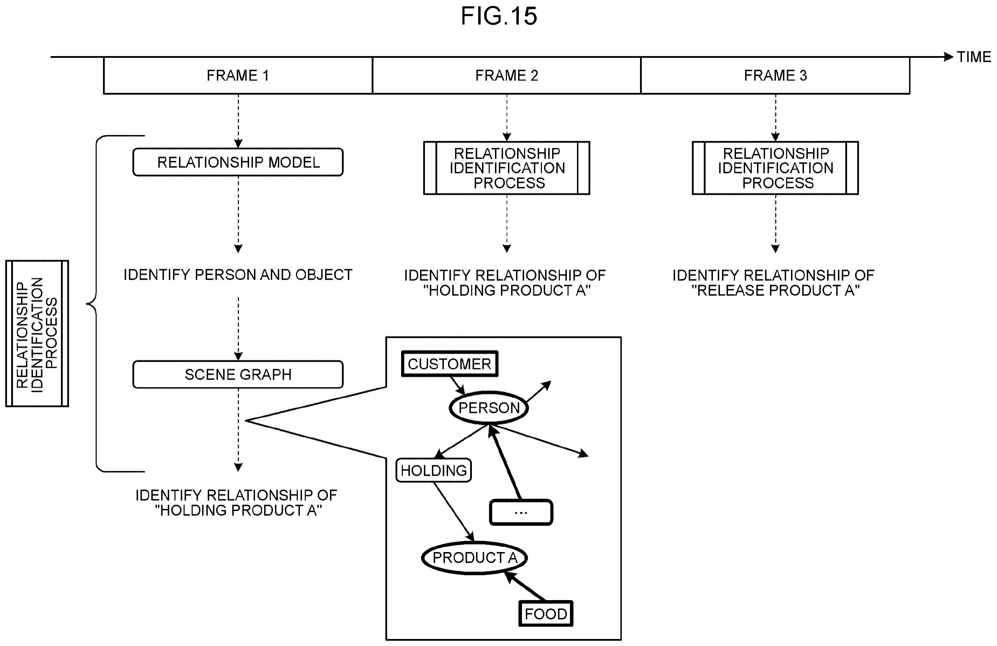

FIG. 15 is a diagram for explaining identification of relationship using the scene graph. As illustrated in FIG. 15, with respect to the frame 1, the control unit 150 identifies the type of a person, the type of an object, the number of people, and the like in a frame 1, using the results obtained by inputting the frame 1 into a machine-trained machine learning model, or by performing a known image analysis on the frame 1. For example, the control unit 150 identifies the "person (customer)" as the type of the person, and the "product (product A)" as the type of the object. The control unit 150 then identifies the relationship of the "person (customer) is holding the product (product A)" between the node "person" with the attribute "customer" and the node "product A" with the attribute "food", according to the scene graph. The control unit 150 identifies the relationship for each frame, by performing the relationship identification process described above for each of the subsequent frames, such as a frame 2 and a frame 3.

As described above, for example, by using a scene graph generated for each store, the information processing device 100 according to the second embodiment can easily determine the relationship suitable for the store, without re-training according to the store as the machine learning model or the like. Therefore, the information processing device 100 according to the second embodiment can easily implement a system using the present embodiment.

### Identification of Relationship Using Scene Graph

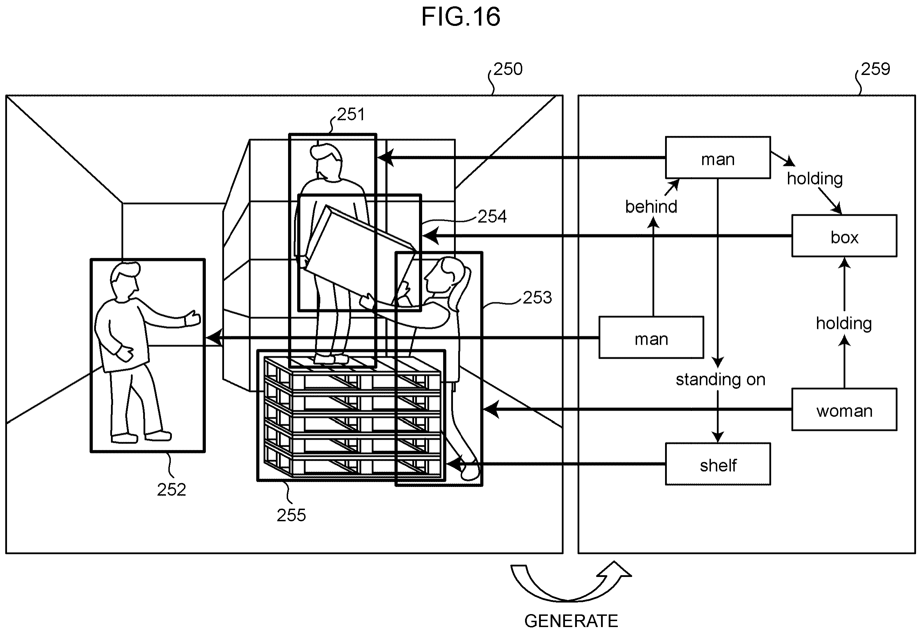

FIG. 16 is a diagram illustrating an example of relation identification using the scene graph. For example, by using the existing detection algorithms, the control unit 150 detects an object including a person from a captured image 250, estimates the relationship between the objects, and generates a scene graph 259 that represents the objects and the relationship between the objects, that is, context. In this example, the existing detection algorithms include You Only Look Once (YOLO), a single shot multibox detector (SSD), a region-based convolutional neural network (RCNN), and the like, for example.

In the example in FIG. 16, at least two men (man) indicated by Bboxes 251 and 252, a woman (woman) indicated by a Bbox 253, a box (box) indicated by a Bbox 254, and a shelf (shelf) indicated by a Bbox 255, are detected from the captured image 250. Then, for example, the control unit 150 generates the scene graph 259, by cutting out the Bbox area of each object from the captured image 250, extracting the feature amount of each area, and estimating the relationship between the objects from the feature amount of a pair of objects (Subject, Object). In FIG. 16, for example, the scene graph 259 represents the relationship of a man indicated by the Bbox 251 is standing on (standing on) the shelf (shelf) indicated by the Bbox 255. Moreover, for example, the relationship of the man indicated by the Bbox 251, that is indicated in the scene graph 259 is not limited to one. As illustrated in FIG. 16, in addition to the shelf (shelf), all the estimated relationships such as behind (behind) the man indicated by the Bbox 252, and holding (holding) the box (box) indicated by the Bbox 254 are represented in the scene graph 259. Thus, by generating a scene graph, the control unit 150 can identify the relationship between the object and the person in the video image.

### (d) Fourth Embodiment

While the embodiments of the present invention have been described, the present invention may be implemented in various other forms in addition to the embodiments as described above.

### Numerical Values and the like

The nodes, relationships, specific examples, numerical values, and the like in the graph used in the embodiments described above are merely examples, and may be changed as desired. Moreover, the flow of the process described in each flowchart may also be modified as appropriate within a consistent range. Furthermore, the language model is an example of a visual language model, and a small-scale language model may also be used in addition to the LLM. An example of the detection target includes a person, a product, and the like.

### Case 1

If the request of the person in charge of the store is "to efficiently display products", the information processing device 100 described above can provide appropriate coaching. Specifically, by analyzing the video image of the area where the product is arranged, when a predetermined condition is satisfied, the information processing device 100 identifies the interaction information of the customer in the area during the first period of time. By using the identified interaction information of the customer, the information processing device 100 generates information on the product display using the language model. Then, on the basis of coaching information in which the period of time after the first period of time is associated with the information on the product display, the information processing device 100 displays the information on the product display on the employee terminal, as measures to be taken during the period of time after the first period of time.

For example, by identifying and analyzing the video image of each product whose sales rates have improved, by the video analysis process, the information processing device 100 accumulates the analysis information (feature amounts) of the sales area of the product. Moreover, as know-how corresponding to the request, for example, the information processing device 100 acquires know-how to improve the efficiency of display work such as "Products are to be displayed when there are less customers" and "Displaying of products is to be finished before the sales of the products increase", or acquires safety know-how for display work such as "Display work at high places is to be carried out by multiple people" and the like. Then, on the basis of the results obtained by inputting the analysis result of the video image, the request, and the acquired know-how into the language model, the information processing device 100 outputs a response to the terminal of the person in charge of the store.

As a response, coaching information such as "Display work of the product A is to be finished before 13:00 when the sales of the product A increase. However, because the display location of the product A includes high places, the work is to be carried out by two or more people" is output. The response may also be generated by the process using the interaction information described in the second embodiment.

### Case 2

The information processing device 100 described above can provide appropriate coaching, when the request from the person in charge of the store is "safe customer guidance to prevent accidents". Specifically, by analyzing the video image of the area where the product is arranged, when a predetermined condition is satisfied, the information processing device 100 identifies the interaction information of the customer in the area during the first period of time. By using the identified interaction information of the customer, the information processing device 100 generates guide information that indicates the customer guidance in the store using the language model. Then, on the basis of the coaching information in which the period of time after the first period of time is associated with the guide information that indicates the customer guidance, the information processing device 100 displays the guide information during the period of time after the first period of time on the digital signage placed in the store 1.

For example, by identifying and analyzing the video image of each product whose sales rates have improved, by the video analysis process, the information processing device 100 accumulates the analysis information (feature amounts) of the sales area of the product. Moreover, as know-how corresponding to the request, for example, the information processing device 100 acquires customer guidance know-how such as "Guide the customers so that 20 or more people do not gather in an aisle", the "Flow of people becomes active when three or more security guards move around", "During events, make the floors above and below the floor where the event takes place one-way", or the like. Then, the information processing device 100 outputs the results obtained by inputting the analysis result of the video image, the request, and the acquired know-how into the language model, to the digital signage.

The response may be "Arrange color cones (registered trademark) or the like to make the aisle one-way, if a queue is formed between 13:00 and 16:00 when the sales of the product A and the product C increase" on the next day after the analysis data, or the like. In this case, the information processing device 100 may output the response to the digital signage, or may output a message to the customer such as "Please do not stop and move on, because there will be more people between 13:00 and 16:00" or the like on the digital signage. The response may also be generated by the process using the interaction information described in the second embodiment.

### Case 3

The information processing device 100 described above can provide appropriate coaching, when the request of the person in charge of the store is the "employee allocation for safety and for preventing crimes". Specifically, by analyzing the video image of the area where the product is arranged, when a predetermined condition is satisfied, the information processing device 100 identifies the crowded situation of the area. Then, by using the identified crowded situation of the area, the information processing device 100 generates information on measures relating to the employee allocation using the language model.

For example, by identifying and analyzing the video image of each product whose sales rates have improved, by the video analysis process, the information processing device 100 accumulates the analysis information (feature amounts) of the sales area of the product. Moreover, as know-how corresponding to the request, for example, the information processing device 100 acquires know-how of employee allocation such as the "Crime rate decreases when three or more security guards move around", "Strengthen the monitoring of less-selling products, because the rate of shoplifting of less-selling products is higher than that of selling products", or the like. Then, the information processing device 100 outputs the results obtained by inputting the analysis result of the video image, the request, and the acquired know-how into the language model, to the digital signage.

As a response, coaching information such as "three or more employees are to move around between 13:00 and 16:00 when the sales of the product A and the product C increase, and actively talk to a suspicious person" is output. The response may also be generated by the process using the interaction information described in the second embodiment.

### Language Model

The language model is a model based on transformer that is trained using a token set generated from a token set in which some of a plurality of tokens are masked. For example, by using a token set (unsupervised training data set), the information processing device 100 trains the language model. The language model includes a deep neural network. For example, the language model is a machine learning model embedded with an architecture referred to as transformer. In other words, the language model is a language model based on transformer. A known transformer is a bidirectional encoder representation from transformers (BERT). Some of the tokens in the token set are masked, and by estimating the masked tokens, the information processing device 100 trains the language model.

Moreover, for example, the language model may be a large-scale language model in which the three elements of computational volume, data volume, and number of model parameters are scaled up. The computational volume is the workload to be processed by a computer. The data volume is the amount of information of text data input to the computer. Moreover, the number of model parameters is parameters unique to the deep learning technology.

### AI Agent

An example of variations of the AI agent will now be described. Some of the processing procedures and control procedures illustrated in the document and drawings described above can be used as processing procedures and control procedures of the AI agent. For example, given a goal, the AI agent generates tasks to achieve the goal, collects information to allow the language model to perform the generated tasks, and cause the language model to perform the tasks. For example, a request for measures is set as a goal.

More specifically, given a goal, the AI agent causes the language model to generate tasks to achieve the goal. The AI agent then collects information to allow the language model to perform the generated tasks from the storage unit, and performs the tasks by inputting the collected information into the language model. Then, by inputting the collected information into the language model, the AI agent generates information on measures to be taken in the store.

For example, the AI agent collects the analysis results of the video images stored in the storage unit during the first period of time. Moreover, by inputting a prompt including the analysis result of the video image stored in the storage unit during the first period of time and a request for measures to be taken in the store into the language model, the AI agent generates information on measures to be taken in the store, as a response to the request.

### System

The processing procedures, the control procedures, the specific names, and information including various types of data and parameters illustrated in the document and drawings described above may be changed as desired, unless otherwise specified.

Moreover, the specific mode of dispersion and integration of the components of each device is not limited to the ones illustrated in the drawings. For example, the KG generation unit 152 and the ASG generation unit 153 may be integrated. That is, all or part of the components can be functionally or physically dispersed or integrated in an optional unit, depending on various loads, the usage status, and the like. Furthermore, all or optional part of the processing functions of the devices may be implemented by a CPU and a computer program analyzed and executed by the CPU, or may be implemented as hardware by wired logic.

Still furthermore, all or an optional part of the processing functions performed by the devices may be implemented by a CPU and a computer program analyzed and executed by the CPU, or may be implemented as hardware by wired logic.

### Hardware

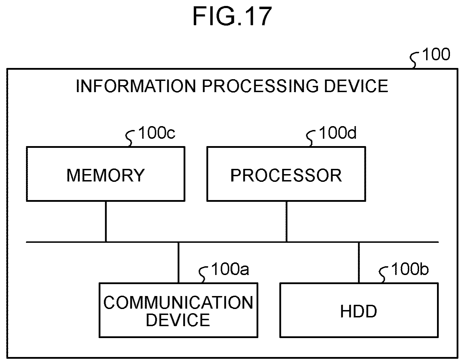

FIG. 17 is a diagram for explaining an example of a hardware configuration. As illustrated in FIG. 17, the information processing device 100 includes a communication device 100a, a hard disk drive (HDD) 100b, a memory 100c, and a processor 100d. Moreover, the units illustrated in FIG. 17 are connected to each other by a bus or the like.

The communication device 100a is a network interface card or the like, and performs communication with other devices. The HDD 100b stores a computer program and DB that operate the functions illustrated in FIG. 5.

The processor 100d reads a computer program that executes the same process as that of each processing unit illustrated in FIG. 5 from the HDD 100b and the like, and develops the read computer program in the memory 100c. The processor 100d then operates a process that executes each function described in FIG. 5 and the like. For example, this process executes the same function as that of each processing unit included in the information processing device 100. Specifically, the processor 100d reads computer programs having the same functions as the acquisition unit 151, the KG generation unit 152, the ASG generation unit 153, the graph analysis unit 154, and the like, from the HDD 100b and the like. Then, the processor 100d executes a process that executes the same process as the acquisition unit 151, the KG generation unit 152, the ASG generation unit 153, the graph analysis unit 154, and the like.

Thus, the information processing device 100 operates as an information processing device that executes a generation method by reading and executing a computer program. Moreover, the information processing device 100 can implement the same functions as those of the embodiments described above, by reading the computer program described above from a recording medium using a medium reading device, and executing the read computer program described above. The computer program referred to in the other embodiments is not limited to being executed by the information processing device 100. For example, the embodiments described above may be similarly applied, even when another computer or server executes the computer program, or when the computer and server execute the computer program in cooperation.

The computer program may be distributed via a network such as the Internet. Moreover, the computer program may be executed by being recorded in a computer readable recording medium such as a hard disk, a flexible disk (FD), a CD-ROM, a magneto-optical disk (MO), and a digital versatile disc (DVD), and by being read out from the recording medium by a computer.

According to one embodiment, it is possible to accurately generate information on measures to be taken in a store.

## Claims

1. A generation program that causes a computer (100) to execute a process comprising:
acquiring (S0) purchase information of a product or service;
detecting (S103) an area in a store where a product is arranged, when an analysis result of the acquired purchase information during a certain period of time set in advance satisfies a predetermined condition;
among a plurality of video images of the detected area, extracting (S104, S105) an analysis result of each of the video images according to the certain period of time;
every time the analysis result of the video image according to the certain period of time is extracted, storing (S106) the extracted analysis result of the video image in a storage;
by inputting a prompt including the analysis result of the video image stored in the storage during a first period of time into a language model, generating (S108) information on a measure to be taken in the store; and
outputting (S109) the generated information on the measure.

2. The generation program according to claim 1, wherein, the generating (S108) includes, by inputting a prompt including the analysis result of the video image stored in the storage during the first period of time and a request for the measure to be taken in the store into a language model, generating information on the measure to be taken in the store, as a response to the request.

3. The generation program according to claim 2, wherein the process further includes:
by searching graph data of the video image of the detected area, identifying (S10) a result indicating interaction information associated with a person, and
by inputting each of domain knowledge of the store, the identified result indicating the interaction information, and the request for the measure to be taken in the store into the language model, generating (S15) information on the measure to be taken in the store, as a response to the request.

4. The generation program according to claim 3, wherein the process further includes:
acquiring (S10) input data in which attribute information of an object serving as a detection target or interaction information between the objects is associated with the object,
by analyzing a video image of an analysis target that is an image of the detected area by the input data, detecting (S11) a first object indicating the object serving as the detection target from a video frame that configures the video image,
based on the input data and the detected first object, generating (S11) a result indicating attribute information of the first object or interaction information of the first object, and
generating (S11) graph data in which the generated result is associated with the detected first object.

5. The generation program according to claim 1, wherein the process further includes:
acquiring (S14) information on a structure of graph data to be searched, and a person included in the video image of the detected area,
based on the information on the structure of the graph data to be searched, generating (S14, S15) a search query of the graph data,
based on the search query, searching (S15) the graph data in which attribute information of the person or interaction information between the person and an object is associated with the person included in the video image, and
by inputting a prompt including a search result of the searched graph data and a request for the measure to be taken in the store into a language model, generating (S15) information on the measure to be taken in the store, as a response to the request.

6. The generation program according to claim 1, wherein the language model is a model based on transformer, that is trained using a first token set generated from a token set in which some of a plurality of tokens are masked.

7. The generation program according to claim 1, wherein the process further includes:
by analyzing a video image of an area where a product is arranged, when the predetermined condition is satisfied, identifying (S10) interaction information of a customer in the detected area during the first period of time,
by using the identified interaction information of the customer, generating (S15) information on product display using the language model,
based on coaching information in which a period of time after the first period of time is associated with the information on the product display, displaying (S16) the information on the product display on an employee terminal, as a measure to be taken during the period of time after the first period of time.

8. The generation program according to claim 1, wherein the process further includes:
by analyzing a video image of an area where a product is arranged, when the predetermined condition is satisfied, identifying (S10) interaction information of a customer in the detected area during the first period of time,
by using the identified interaction information of the customer, generating (S15) guide information that indicates customer guidance in the store using the language model, and
based on coaching information in which a period of time after the first period of time is associated with the guide information that indicates the customer guidance, displaying (S16) the generated guide information during the period of time after the first period of time on a digital signage placed in the store.

9. The generation program according to claim 1, wherein the process further includes:
identifying (S12) a crowded situation of the area, by analyzing a video image of an area where a product is arranged, when the predetermined condition is satisfied, and
by using the identified crowded situation of the area, generating (S15) information on a measure relating to an employee allocation using the language model.

10. The generation program according to claim 1, wherein
the purchase information is point of sales (POS) data,
the POS data is customer consumption behavior data acquired by a POS system, and data including one of date and time when a product is purchased, number of purchased products, name of purchased product, price of the purchased product, gender of a person who purchased the product, and an age group of the person who purchased the product, as an item in the consumption behavior data, and
the product when the predetermined condition is satisfied is a product whose amount or number of pieces sold increases by a certain amount or more, during the certain period of time.

11. The generation program according to claim 1, wherein, when a goal is given to an AI agent (1a), the AI agent (1a) generates information on a measure to be taken in the store, by generating a task to achieve the goal, collecting the analysis result of the video image from the storage, as information needed to cause the language model to perform the generated task, and inputting the collected analysis results of the video image into the language model.

12. A generation method carried out by a computer (100), comprising:
acquiring (S0) purchase information of a product or service;
detecting (S103) an area in a store where a product is arranged, when an analysis result of the acquired purchase information during a certain period of time set in advance satisfies a predetermined condition;
among a plurality of video images of the detected area, extracting (S104, S105) an analysis result of each of the video images according to the certain period of time;
every time the analysis result of the video image according to the certain period of time is extracted, storing (S106) the extracted analysis result of the video image in a storage;
by inputting a prompt including the analysis result of the video image stored in the storage during a first period of time into a language model, generating (S108) information on a measure to be taken in the store; and
outputting the generated information on the measure.

13. An information processing device (100) that includes a control unit (20) configured to execute a process comprising:
acquiring (S0) purchase information of a product or service;
detecting (S103) an area in a store where a product is arranged, when an analysis result of the acquired purchase information during a certain period of time set in advance satisfies a predetermined condition;
among a plurality of video images of the detected area, extracting (S104, S105) an analysis result of each of the video images according to the certain period of time;
every time the analysis result of the video image according to the certain period of time is extracted, storing (S106) the extracted analysis result of the video image in a storage;
by inputting a prompt including the analysis result of the video image stored in the storage during a first period of time into a language model, generating (S108) information on a measure to be taken in the store; and
outputting (S109) the generated information on the measure.
